# EUROPEAN PATENT SPECIFICATION

(11) **EP 2 824 885 B1**
(45) Date of publication and mention of the grant of the patent: **23.01.2019**
(21) Application number: 13290164.6
(22) Date of filing: 12.07.2013
(51) Int. Cl.: H04L 29/06, H04N 21/4728, H04L 29/08, H04N 21/6587, H04N 21/845, H04N 5/232, H04N 21/262

(54) **A manifest file format supporting panoramic video**
Manifest-Dateiformat zur Unterstützung von Panoramavideo
Format de fichier de manifeste supportant une vidéo panoramique

(43) Date of publication of application: 14.01.2015
(73) Proprietor: Provenance Asset Group LLC, Essex, CT 06426 (US)
(72) Inventor: De Vleeschauwer, Bart, 2970 Schilde (BE); Rondao Alface, Patrice, 1400 Nivelles (BE); Macq, Jean-François, 1083 Ganshoren (BE); Verzijp, Nico, 2018 Antwerpen (BE)
(74) Representative: IP HILLS NV

(56) References cited:
- WO-A1-2012/168365
- MARTIN PRINS ET AL: "A hybrid architecture for delivery of panoramic video", PROCEEDINGS OF THE 11TH EUROPEAN CONFERENCE ON INTERACTIVE TV AND VIDEO, EUROITV '13, 24 June 2013 (2013-06-24), - 26 June 2013 (2013-06-26), page 99, XP055093376, New York, New York, USA DOI: 10.1145/2465958.2465975 ISBN: 978-1-45-031951-5
- THOMAS E ET AL: "Spatially segmented content description in DASH", 104. MPEG MEETING; 22-4-2013 - 26-4-2013; INCHEON; (MOTION PICTURE EXPERT GROUP OR ISO/IEC JTC1/SC29/WG11),, no. m28883, 12 April 2013 (2013-04-12), XP030057416,

## Description

### Field of the Invention

The present invention generally relates to the delivery of panoramic or omnidirectional video from a server or network towards a client. More specifically it relates to the delivery of a video substream of the panoramic video only comprising a spatial subset of the video being a viewport across the panorama.

### Background of the Invention

When watching a panoramic video, a viewer may zoom on an area of the content only watching the content of the video within that area and thus defining a viewport on the panoramic video. The viewer may also continuously move his viewport across the panorama, for example when following a moving item in the panoramic video. The resolution of such a panoramic video may be very high, for example beyond 4K or 8K Ultra High Definition (UHD) resolutions. Therefore, the panoramic video is split-up in spatial subsets, each subset being a separate video stream. This way, the transport mechanism responsible for retrieving the video from the server or network, only needs to retrieve the video streams corresponding to one or more subsets needed to render the current viewport of the user.

For the delivery of the video streams HTTP Adaptive Streaming (HAS) may be used. In HAS a video stream is split up in time segments and for every such a time segment one or more video segments is available. One or more manifest files then define the video segments available to build the video stream. For the same time segment, more than one video segment may be available each in a different resolution or bit rate. This way, a client may choose or retrieve video segments according to bandwidth or client limitations such as screen size, available throughputs or user preferences. Examples of protocols implementing HTTP Adaptive Streaming are HTTP Live Streaming by Apple (HLS), Microsoft Smooth Streaming (MSS), HTTP Dynamic Streaming (HDS) by Adobe and Dynamic Adaptive Streaming over HTTP defined by the 3GPP standard (DASH).

In P. Quax and al, "Evaluation of Distribution of Panoramic Video Sequences in the eXplorative Television Project", in Proceeding of The 22nd ACM Workshop on Network and Operating Systems Support for Digital Audio and Video (NOSSDAV 2012), Toronto, Canada, June 7 - 8, 2012 and in Omar A. Niamut, M.J. Prins, R. van Brandenburg, A. Havekes, "Spatial Tiling And Streaming In An Immersive Media Delivery Network", EurolTV 2011, Lisbon, Portugal, 29th June 2011 extensions of the HAS manifest format have been proposed to jointly support temporal segmentation like in traditional HAS as well as spatial segmentation, thus supporting HAS for panoramic videos.

In WO 2012/168365 A1 methods and systems are described for processing spatially segmented content originating from a content delivery network. One method comprises a client in a media processing device receiving a spatial manifest information comprising one or more spatial representations of a source stream, each spatial representation identifying one or more spatial segment streams, location information for locating one or more delivery nodes in said content delivery network and, optionally, position information for stitching spatial segment frames in said segment streams into a video frame for display; selecting one or more spatial segment streams and on the basis of said spatial manifest information requesting at least one delivery node in said content delivery network to transmit said one or more selected spatial segment streams to said client; and, receiving said one or more selected spatial segment streams from said at least one delivery node.

A disadvantage of this extended manifest format is a big increase of the number of video segments defined by the HAS manifest file as the segments need to be defined for every spatial segment of the panoramic video. When downloading such a manifest file it will comprise a lot of information on video segments which are of no interest to the client as they are not needed to render the viewport. The download time for such a manifest file is thus longer and more processing time is needed to parse the manifest file. This results in a big delay before the panoramic video can start.

A second disadvantage is that there is no backwards compatibility for clients not supporting the extended manifest formats as the new format defines new fields in the manifest format.

### Summary of the Invention

It is an object of the present invention to overcome the above disadvantages by providing a method for selecting a video segment of a panoramic video by a client device from a content delivery network according to appended independent claim 1.

It is an advantage that the video segments for a certain video tile are defined in a separate manifest file per video tile. This preserves backwards compatibility with clients that do not support panoramic video. For such clients a link to a manifest file of a single tile may be provided. The client then sees the single tile as a video stream. The area covered by this single tile may for example be the complete area of the panoramic video, but the manifest file may then refer to video segments and thus video streams in a lower resolution or quality such that the video stream is not too big in size.

It is a further advantage that information on the video segments is comprised within a separate manifest file per video tile and not within the super manifest file. This way the super manifest file can be kept small and fast to download even for large panoramic videos with high resolution and/or with high quality and thus bit rates. To select video segments of a panoramic video, the client needs to download the super manifest file and then only the manifest files of interest. This results in a small delay between the action to play the panoramic video and the actual start of the video.

It should be noted that a link to segment information may be a link to a file comprising this segment information, i.e. sub manifest file.

With playing the video segment it is understood that the video information within the segment is used for displaying the panoramic video on a display of the client device. For rendering the viewport on the display and thus for playing the panoramic video at a certain moment in time, more than one segment may be used. For example, when the viewport is larger than a single tile, multiple segments from multiple tiles may be added together to cover the viewport. The added segment may also be further cropped or scaled to have the viewport matching with the display. The segment may also not be displayed for its complete duration. When the viewport is no longer covered by segment's tile, a new segment may be retrieved and used to further display the panoramic video. How the retrieved segments are used to render the viewport of the panoramic video at a certain moment in time is not the object of the present invention.

Advantageously the tile information comprises position information about the position of the video tiles defined by the super manifest file within the panoramic video. The selecting of the video tile then takes into account this position information.

It is an advantage that, purely based on the tile information available from the super manifest file, the client can select the video tiles needed to render the viewport. The client is thus able to only download the manifest files needed to render the viewport for playback of the video.

Preferably this position information comprises coordinates of at least two corners of a rectangular area. This rectangular area then defines the video tile in space within the panoramic video.

This way the video tile is defined by only two pairs of X- and Y-coordinates or one pair of X- and Y-coordinates together with a pair of X- and Y-offsets, keeping tile information small in size and fast to process.

In a further embodiment the tile information further comprises timing information indicative for a time interval within the duration of the panoramic video during which the positioning information of the video tile is valid. The selecting of the video tile then takes into account this timing information.

It is an advantage that the video tile information has a time aspect as the tile is then no longer static in space, i.e. the video tile can move across the panoramic video. This way, for example, the video stream corresponding to the video tile may display a moving object within the content of the panoramic video. Then, the client does not have to switch between tiles when following this object.

The tile information may further comprise meta information about the content of the video tiles defined by the super manifest file within the panoramic video. When selecting a video tile, the client then takes into account this meta information.

This allows selecting a video tile based on content. This way the client does not need to predict the position of certain events or objects within the panoramic video but can just select the video tile corresponding to the video stream displaying the event or object of interest.

According to an embodiment the manifest file identifies a single HTTP adaptive streaming session.

This allows preserving backwards compatibility with existing HAS protocols allowing adaptive streaming over HTTP such as HLS, MSS, HDS and DASH.

According to another embodiment the retrieving is performed by an HTTP GET request.

As the HTTP GET request is part of the HTTP protocol, all network traffic will be HTTP traffic. HTTP traffic is typically not blocked by firewalls as is often the case for other streaming protocols such as for example the Real-time Transport Protocol (RTP) and the Real-time Transport Control Protocol (RTCP). Furthermore, using the HTTP protocol allows the use of HTTP proxy servers for caching the manifest files and video segment resulting in a decrease of overall network traffic when retrieving the video segments and manifest files.

According to a further embodiment the manifest file and super manifest file are encoded as M3U playlist files.

This allows the parsing and processing of the manifest and super manifest file in a standardized way. Code for parsing playlist M3U playlist files can thus be reused for the manifest files.

According to an embodiment the segment information comprises information on the start and end times of the video segments within the duration of said panoramic video. These start and stop times are then identical for corresponding video segments across video tiles such that a seamless switch between video tiles is possible.

In other words, a video segment defined in one manifest file for a certain time interval will have a corresponding video segment in another manifest file for the same time interval but for a different tile. By this alignment of time intervals over video tiles from different manifest files, the client can easily switch between tiles at the end of a video segment by just starting the video segment covering the next time interval of another video tile. It is noticed that alternative implementations may use non-aligned time intervals for video segments among different tiles and that, hence, the start- and stop times may not be identical. Then, when moving from one tile to the other, a temporal cut of the new segment will have to be made in order to have it played continuous, i.e. temporal splicing, when making the transition of the previous segment to the next. Also, when the segments are temporal aligned among tiles, a temporal cut of segments may still occur when playing the panoramic video. If during the playback of a segment of a tile, the viewport moves and is no longer covered by the current tile, a new segment for the same time interval will have to be retrieved and then cut until the moment the viewport moved away. At the cut time, the playout process then performs a temporal splicing from the current tile to the newly retrieved and cut segment.

Advantageously the segment information comprises information on one or more of the group of bit rate, quality, resolution, video codec and audio codec of said video segment.

This allows the definition of multiple video segments within the same time interval but with another bit rate, quality, resolution, video codec and/or audio codec. The client can then select a specific video segment according to for example supported audio and/or video codecs, network bandwidth, user settings or screen resolution. This adaptive retrieving of video segments allows a seamless playback of the video stream under dynamic conditions.

Advantageously the links to information are hyperlinks within said manifest or super manifest file pointing to a separate file comprising said information.

By linking to further files comprising the actual information the size of the manifest and super manifest files is further reduced allowing a shorter delay to start the playback of a video segment and less data to be retrieved.

In addition to the method described above the invention also relates to a computer program product comprising computer-executable instructions for performing the method described above when the program is run on a computer and to a data processing system programmed for carrying out the method described above according to independent claims 12 and 13.

The invention also relates to a computer readable storage medium comprising the computer program product described above.

The invention further also relates to a client device for selecting a video segment of a panoramic video from a content delivery network according to independent claim 10.

### Brief Description of the Drawings

Fig. 1 shows a flow diagram illustrating a preferred embodiment of the invention;
Fig. 2 illustrates manifest files according to a preferred embodiment of the invention; and
Fig. 3 illustrates a client device for selecting a video segment according to an embodiment of the invention.

### Detailed Description of Embodiment(s)

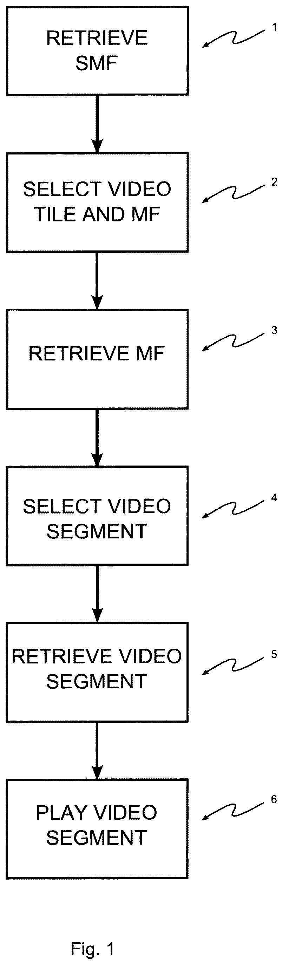

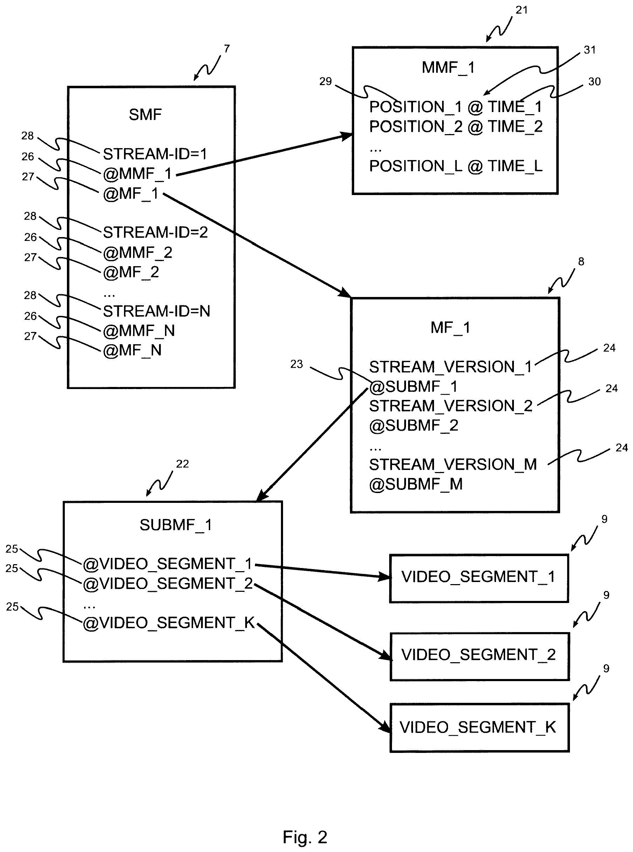

Fig. 1 illustrates by a flow diagram how a video segment is retrieved from a content delivery network and displayed or played in a client device as part of a panoramic video according to a preferred embodiment of the present invention. In a first step 1, the client device retrieves a Super Manifest File 7 (SMF) from a content delivery network (CDN). This CDN may be a single server or an assembly of servers accessible via a network connection from the client. The CDN may further comprise proxy and caching servers allowing fast access to files and content made available by the CDN. The SMF 7 is retrieved from the CDN by an HTTP GET request as defined by the HTTP protocol by using a Unified Resource Allocator or URL to this SMF 7. The SMF 7 defines video tiles in the panoramic video. For each tile a link 26 is provided to a Motion Manifest File (MMF) 21 and a link 27 is provided to a Manifest File (MF) 8. Fig. 2 further illustrates how the manifest files are linked together according to the preferred embodiment. The SMF 7 is encoded as an M3U encoded playlist file in the following way:

```
#EXTM3U
      #EXT-X-STREAM-INF:STREAM-ID=1
       http://linktovideos.com/panoramicmovie/tile_1/playlist.m3u8
       http://panoramicvideos.com/nicemovie/tile_1/motion_manifest.m3u8
      #EXT-X-STREAM-INF:STREAM-ID=2
       http://linktovideos.com/panoramicmovie/tile_2/playlist.m3u8
       http://panoramicvideos.com/nicemovie/tile_2/motion_manifest.m3u8
      #EXT-X-STREAM-INF:STREAM-ID=N
       http://linktovideos.com/panoramicmovie/tile_N/playlist.m3u8
       http://panoramicvideos.com/nicemovie/tile_N/motion_manifest.m3u8
```

In SMF 7 the video tiles are thus defined by a STREAM-ID 28 and for every STREAM-ID 1 to N there is a hyperlink 27 provided to a corresponding manifest file 8 "playlist.m3u8" and a hyperlink 26 to a motion manifest file (MMF) 21 "motion_manifest.m3u8". The SMF 7 provides information about the tile itself through the motion manifest file 21. The motion manifest file 21 on its turn comprises tile information 31, more particularly position information 29 about the position of the video tile within the panoramic video. This MMF 21 is again encoded in the same M3U format as the SMF 7 in the following way:

```
#EXTM3U
      #EXT-X-STREAM-INF: tile_x_1=0, tile_y_1=0, tile_x_2=255, tile_y_2=255,
       move_time=23000
      #EXT-X-STREAM-INF: tile_x_1=1, tile_y_1=1, tile_x_2=256, tile_y_2=256,
       move_time=23040
```

The position information of the video tile comprises the coordinates (tile_x_1, tile_y_1) and (tile_x_2, tile_y_2) of two corners of a rectangular area defining the video tile in space within the panoramic video. The coordinates are defined as positions in pixels relative to the upper left corner of the panoramic video frame. The tile information further comprises the "move_time" field which is time information 30 indicative for a time interval within the duration of the panoramic video during which the position information 29 is valid. This "move_time" field indicates in milliseconds (ms) when the current spatial position of the rectangular area and thus the spatial position of the video tile is obsolete and that the next line in the MMF 21 should be used for the position of the video tile. In the motion manifest file above the position of the video tile is thus ((0,0);(255,255)) in the time interval [0ms - 22999ms] and ((1,1);(256,256)) in the time interval [23000ms - 23039ms]. When displaying a specific video tile in a panoramic video, the video tile will thus move within the area of the panoramic video.

It is further not required that the panoramic video is exactly divided in tiles adjacent to one another. Tiles may be overlapping, one tile may be completely comprised within another tile or one tile may even cover the complete panoramic video.

In a next step 2, based on the retrieved position information of the tile, the client then selects the tile for which the video stream should be displayed and the corresponding MF 8. A user may for example have indicated a certain region of interest on the panoramic video he wants to watch. The client will then select one or more video tiles such that the selected region of interest is completely covered by the selected tiles during the time interval the region of interest is to be displayed. Based on the STREAM-ID field 28 from the SMF 7 the corresponding manifest file 8 for the video tile of interest is then retrieved 3 from the content delivery network in a next step. This retrieving 3 is may again be done by an HTTP GET Request where the URL or link 27 of the MF 8 "playlist.m3u8" obtained from the SMF 7 is specified.

The MF 8 defines the video stream for the selected video tile. This MF 8 is compliant with the HTTP Live Streaming protocol (HLS) and thus defines a HTTP Live Streaming session. According to the HLS protocol a video stream, in this case the stream corresponding to the selected video tile, is divided into several video segments 9. To display the video stream, the video segments 9 are downloaded and played one after the other. In HLS, the video segments 9 may be available in different versions, for example according to the bit rate of the video, the quality of the video, the resolution of the video or the audio and/or video coded used for encoding the video. In the MF 8 segment information (24) is available on the different versions available for the video stream. The MF 8 further comprises links to the video segments 9 in a certain version and segment information on the start and stop time of the segment within the duration of the video stream and thus the duration of the panoramic video.

To optimize the size of the MF 8, the manifest file may be hierarchical as illustrated in Fig 2. The MF 8 itself then defines the versions 24 available for a single video stream and thus video tile and provides a corresponding link 23 to a Sub Manifest File (SUBMF) 22. This sub manifest file 22 then comprises links 25 to all the video segments 9 encoded in that version.

In a further step 4, based on the desired version of the segment and the time interval needed the client then selects the video segment of interest by getting the link 25 from the MF 8 or sub manifest file 22. Using an HTTP GET Request the corresponding video segment 9 is retrieved from the CDN in a next step 5.

The client then plays the retrieved video segment 9 on a video player in the client in a step 6. The client may not play the complete video segment as retrieved, but scale it or crop a small area out of the area covered by the video segment such that it covers the viewport selected by the user or any other means. Video segments covering the same time interval may also be combined in order to render the viewport. For example segments of two video tiles adjacent to one another may be selected and combined to one bigger segment. Again, further scaling or cropping may again be done on the bigger segment such that the area covered by the combined segments renders the viewport. The client may also adapt the segments temporally in order to adapt the played time interval of the segments. For example, when the viewport of the client is no longer covered by a tile during playback, another segment of another tile may be retrieved and cut in time in order to have the panoramic video displayed continuously in time without a sudden jump to the beginning of a next segment.

When playing a panoramic video, the client may continuously retrieve segments from different video tiles as region of interest and thus the viewport changes. In HTTP Live Streaming (HLS) the video segments 9 according to a certain version 24 are continuous in time so when playing all video segments one after the other a smooth and continuous video stream is obtained without glitches. Also the video segments covering the same time interval along different versions of a video segment are aligned in time making it possible to switch from one version to the other. According to an embodiment this principle is also applied to the video segments of different tiles covering the same time interval. The start and stop times are then identical for corresponding video segments across video tiles. A VIDEO_SEGMENT_1 24 will then have the same start and stop time for all versions of the video segment and for all video tiles. If the client then switches from a video segment in one video tile to a video segment in another video tile during the playback of a panoramic video, there is no time synchronization needed between the video segments as the last frame of the first segment can be followed by the first frame of the second segment.

In an alternative embodiment the tile information in the motion manifest file 21 may also be comprised within the super manifest file 7 itself instead of providing a link to a separate motion manifest file. The two may also be combined by providing a part of the tile information in the SMF 7 and a part in a MMF 21.

In a further embodiment the tile information 31 may also comprise meta information about the content of the video tile. This meta information may highlight popular events happening within the video stream of the video tile. Some examples of meta information are:
- "goal": indicating that in this video tile and optionally within the time information of the video a goal of soccer game is captured.
- "guitar solo": if the panoramic video captures a concert, this meta information indicates that a guitar solo can be seen in this video tile.
- "popular": this meta information indicates that this video tile is popular among the people who watched the panoramic video.

During the selection step 2 of the video tile, the client may take into account this meta information. For example, when a user has indicated that he wants to watch a certain object or item within the panoramic video, the client may get two video tiles comprising the object or item. One of the video tiles may then comprise meta information indication it will track the object or item the user has indicated. The client will then select this video tile as the video tile will move along the panoramic video keeping the object or item within the tile.

The embodiments above have been described by encoding the manifest files in an M3u format according to the HLS protocol but the invention is not limited thereto. Other encoding schemes for the SMF 7 are possible where it can link to any manifest file 8 supporting adaptive streaming such as for example MSS, DASH, HDS. The encoding scheme of the SMF 7 may also be different from the encoding scheme used by the manifest files 8 used by the adaptive streaming protocol.

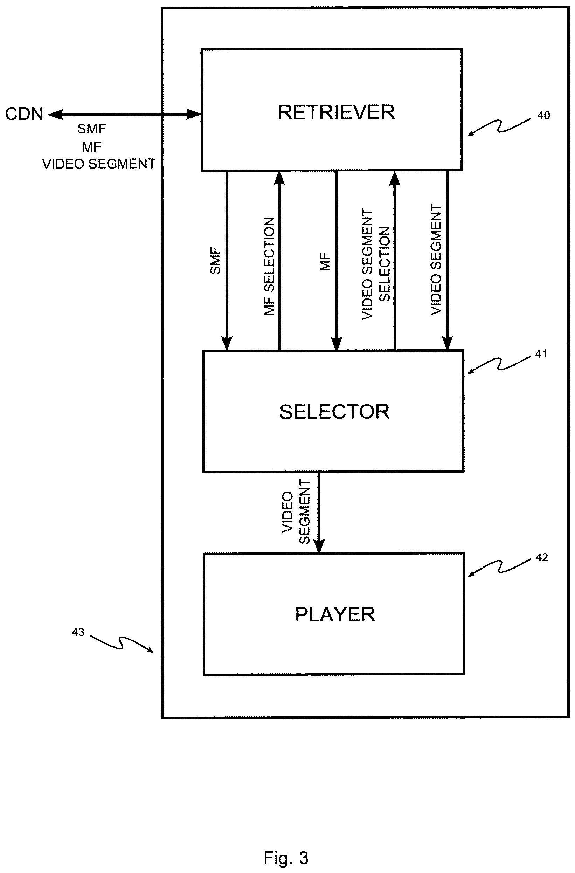

Fig. 3 illustrates a client device 43 adapted to perform the method according to the embodiments above. The device 43 comprises a retriever 40 for performing the retrieving steps 1, 3 and 5. This retriever 40 may thus retrieve the super manifest file 7, manifest file 8 and selected video segment from the content delivery network. If needed the retriever may also retrieve the motion manifest file 21 and sub manifest file 22 in a similar way. It will provide those to the selector 41 who may select those files and video segment according to the selecting steps 2 and 4. The client device 43 further comprises a player 42 for performing the playing step 6 according to the above embodiments and will thus play the selected video segment within the client device 43.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for selecting a video segment (9) of a panoramic video by a client device from a content delivery network, the method comprising:
- retrieving (1) a super manifest file (7) from said content delivery network, said super manifest file defining (28) video tiles, said super manifest file comprising tile information (31) and/or links (26) to tile information (31); wherein said tile information comprises information (27) for retrieving a corresponding manifest file (8) for each one of said video tiles; and
- selecting (2) a video tile and corresponding manifest file (8) from said super manifest file based on said tile information; and
- retrieving (3) said manifest file (8) from said content delivery network; said manifest file comprising segment information (24) and/or links (23) to segment information (25); wherein said segment information comprises information on video segments (9) of said video tile; and
- selecting (4) a video segment based on said segment information (24, 25);
- retrieving (5) said selected video segment; and
- playing (6) said video segment on said client device;
**characterized in that** said tile information comprises multiple position information (29) about the position of said video tile defined by said super manifest file (7) within said panoramic video; and wherein said selecting (2) said video tile takes into account said position information; and wherein said tile information further comprises corresponding timing information (30) indicative for a time interval within the duration of said panoramic video during which the correspondent positioning information (29) of said video tile is valid; and wherein said selecting (2) said video tile takes into account said timing information (30) of said video tile.

2. A method according to claim 1 wherein said position information (29) comprises coordinates of at least two corners of a rectangular area; said rectangular area defining said video tile in space within said panoramic video.

3. A method according to claim 1 wherein said tile information (31) comprises meta information about the content of said video tiles defined by said super manifest file (7) within said panoramic video; and said selecting (2) said video tile takes into account said meta information.

4. A method according to claim 1 wherein said manifest file identifies a single HTTP adaptive streaming session.

5. A method according to claim 1 wherein said retrieving is performed by an HTTP GET request.

6. A method according to claim 1 wherein said manifest file (8) and said super manifest file (7) are encoded as M3U playlist files.

7. A method according to claim 1 wherein said segment information (24) comprises information on the start and end times of said video segments within the duration of said panoramic video; and wherein said start and stop times are identical for corresponding video segments across video tiles such that a seamless switch between video tiles is possible.

8. A method according to claim 1 wherein said segment information comprises information on one or more of the group of bit rate, quality, resolution, video codec and audio codec of said video segment.

9. A method according to claim 1 wherein said links to information are hyperlinks within said manifest or super manifest file pointing to a separate file comprising said information.

10. A client device (43) for selecting a video segment (9) of a panoramic video from a content delivery network, the device (43) further comprising:
- a retriever (40) adapted for retrieving a super manifest file (7) from said content delivery network, said super manifest file defining video tiles, said super manifest video file comprising tile information and/or links to tile information; wherein said tile information comprises a link (27) for retrieving a corresponding manifest file (8) for each one of said video tiles; and
- a selector (41) adapted for selecting a video tile and corresponding manifest file (8) from said super manifest file (7) based on said tile information; and
said retriever (40) being further adapted for retrieving said manifest file from said content delivery network; said manifest file comprising segment information (24) and/or links to segment information on video segments (9) of said video tile; and said selector (41) being further adapted for selecting a video segment based on said segment information;
said retriever (40) being further adapted for retrieving said selected video segment; and
said client device (43) further comprising a video player (42) for playing said video segment on said client device;
**characterized in that** said tile information comprises multiple position information (29) about the position of said video tile defined by said super manifest file (7) within said panoramic video; and wherein said selector (41) is further adapted to take into account said position information upon said selecting said video tile and corresponding manifest file;
and wherein said tile information further comprises corresponding information (30) indicative for a time interval within the duration of said panoramic video during which the correspondent positioning information (29) of said video tile is valid; and wherein said selector (41) is further adapted to take into account said timing information (30) of said video tile upon said selecting said video tile and corresponding manifest file.

11. A computer program product comprising computer-executable instructions for performing the method according to claim 1 when the program is run on a computer.

12. A computer readable storage medium comprising the computer program product according to claim 11.

13. A data processing system programmed for carrying out the method according to claim 1.

## Patentansprüche

1. Verfahren zum Auswählen eines Videosegments (9) eines Panoramavideos durch ein Client-Gerät von einem Content-Auslieferungsnetzwerk, wobei das Verfahren umfasst:
- Abrufen (1) einer Super-Manifestdatei (7) von dem Content-Auslieferungsnetzwerk, wobei die Super-Manifestdatei (28) Videokacheln definiert, wobei die Super-Manifestdatei Kachelinformationen (31) und/oder Links (26) zu Kachelinformationen (31) umfasst; wobei die Kachelinformationen einen Information (27) zum Abrufen einer entsprechenden Manifestdatei (8) für jede der Videokacheln umfassen; und
- Auswählen (2) einer Videokachel und entsprechenden Manifestdatei (8) von der Super-Manifestdatei auf Grundlage der Kachelinformationen; und
- Abrufen (3) der Manifestdatei (8) von dem Content-Auslieferungsnetzwerk; wobei die Manifestdatei Segmentinformationen (24) und/oder Links (23) zu Segmentinformationen (25) umfasst; wobei die Segmentinformationen Informationen über Videosegmente (9) der Videokachel umfassen; und
- Auswählen (4) eines Videosegments auf Grundlage der Segmentinformationen (24, 25);
- Abrufen (5) des ausgewählten Videosegments; und
- Abspielen (6) des Videosegments auf dem Client-Gerät; **dadurch gekennzeichnet, dass** die Kachelinformationen mehrere Positionsinformationen (29) über die durch die Super-Manifestdatei (7) in dem Panoramavideo definierte Position der Videokachel umfassen; und wobei das Auswählen (2) der Videokachel die Positionsinformationen berücksichtigt;
und wobei die Kachelinformationen des Weiteren entsprechende Timing-Informationen (30) umfassen, die ein Zeitintervall innerhalb der Dauer des Panoramavideos anzeigen, während dessen die entsprechenden Positionsinformationen (29) der Videokachel gültig sind; und wobei das Auswählen (2) der Videokachel die Timing-Informationen (30) der Videokachel berücksichtigt.

2. Verfahren nach Anspruch 1, wobei die Positionsinformationen (29) Koordinaten von mindestens zwei Ecken eines rechteckigen Bereichs umfassen; wobei der rechteckige Bereich die Videokachel räumlich innerhalb des Panoramavideos definiert.

3. Verfahren nach Anspruch 1, wobei die Kachelinformationen (31) Metainformationen über den Content der durch die Super-Manifestdatei (7) in dem Panoramavideo definierten Videokacheln umfassen; und wobei das Auswählen (2) der Videokachel die Metainformationen berücksichtigt.

4. Verfahren nach Anspruch 1, wobei die Manifestdatei eine einzeln HTTP-adaptive Streaming-Session identifiziert.

5. Verfahren nach Anspruch 1, wobei das Abrufen durch eine HTTP-GET-Anforderung durchgeführt wird.

6. Verfahren nach Anspruch 1, wobei die Manifestdatei (8) und die Super-Manifestdatei (7) als M3U-Playlist-Dateien kodiert werden.

7. Verfahren nach Anspruch 1, wobei die Segmentinformationen (24) Informationen über die Anfangs- und Endzeiten der Videosegmente innerhalb der Dauer des Panoramavideos umfassen; und wobei die Start- und Stoppzeiten für entsprechende Videosegmente über Videokacheln hinweg identisch sind, sodass ein nahtloser Wechsel zwischen Videokacheln möglich wird.

8. Verfahren nach Anspruch 1, wobei die Segmentinformationen Informationen über eines oder mehrere der Gruppe von Bitrate, Qualität, Auflösung, Video-Codec und Audio-Codec des Videosegments umfassen.

9. Verfahren nach Anspruch 1, wobei die Links zu Informationen Hyperlinks innerhalb der Manifest- oder Super-Manifestdatei sind, die auf eine separate Datei zeigen, die die Informationen umfasst.

10. Client-Gerät (43) zum Auswählen eines Videosegments (9) eines Panoramavideos von einem Content-Auslieferungsnetzwerk, wobei das Gerät (43) des Weiteren umfasst:
- einen Retriever (40), der zum Abrufen einer Super-Manifestdatei (7) von dem Content-Auslieferungsnetzwerk geeignet ist, wobei die Super-Manifestdatei Videokacheln definiert, wobei die Super-Manifestdatei-Videodatei Kachelinformationen und/oder Links zu Kachelinformationen umfasst; wobei die Kachelinformationen einen Link (27) zum Abrufen einer entsprechenden Manifestdatei (8) für jede der Videokacheln umfassen; und
- einen Selektor (41), der zum Auswählen einer Videokachel und entsprechenden Manifestdatei (8) von der Super-Manifestdatei (7) auf Grundlage der Kachelinformationen geeignet ist; und wobei der Retriever (40) des Weiteren zum Abrufen der Manifestdatei von dem Content-Auslieferungsnetzwerk geeignet ist; wobei die Manifestdatei Segmentinformationen (24) und/oder Links zu Segmentinformationen über Videosegmente (9) der Videokachel umfasst; und wobei der Selektor (41) des Weiteren zum Auswählen eines Videosegments auf Grundlage der Segmentinformationen geeignet ist;
wobei der Retriever (40) des Weiteren zum Abrufen des ausgewählten Videosegments geeignet ist; und
wobei das Client-Gerät (43) des Weiteren einen Videoplayer (42) zum Abspielen des Videosegments auf dem Client-Gerät umfasst;
**dadurch gekennzeichnet, dass** die Kachelinformationen mehrere Positionsinformationen (29) über die durch die Super-Manifestdatei (7) in dem Panoramavideo definierte Position der Videokachel umfassen; und wobei der Selektor (41) des Weiteren geeignet ist, die Positionsinformationen bei dem Auswählen der Videokachel und entsprechenden Manifestdatei zu berücksichtigen;
und wobei die Kachelinformationen des Weiteren entsprechende Informationen (30) umfassen, die ein Zeitintervall innerhalb der Dauer des Panoramavideos anzeigen, während dessen die entsprechenden Positionsinformationen (29) der Videokachel gültig sind; und wobei der Selektor (41) des Weiteren geeignet ist, die Timing-Informationen (30) der Videokachel bei dem Auswählen der Videokachel und entsprechenden Manifestdatei zu berücksichtigen.

11. Computerprogrammprodukt, das computerausführbare Anweisungen zum Durchführen des Verfahrens nach Anspruch 1 umfasst, wenn das Programm auf einem Computer ausführt wird.

12. Computerlesbarer Speicherdatenträger, der das Computerprogrammprodukt nach Anspruch 11 umfasst.

13. Datenverarbeitungssystem, das zum Ausführen des Verfahrens nach Anspruch 1 programmiert wird.

## Revendications

1. Procédé de sélection d'un segment vidéo (9) d'une vidéo panoramique par un dispositif client à partir d'un réseau de distribution de contenu, le procédé comprenant :
- la récupération (1) d'un superfichier de manifeste (7) à partir dudit réseau de distribution de contenu, ledit superfichier de manifeste définissant (28) des carreaux vidéo, ledit superfichier de manifeste comprenant des informations de carreau (31) et/ou des liens (26) vers les informations de carreau (31) ; lesdites informations de carreau comprenant des informations (27) pour récupérer un fichier de manifeste correspondant (8) pour chacun desdits carreaux vidéo ; et
- la sélection (2) d'un carreau vidéo et d'un fichier de manifeste correspondant (8) à partir dudit superfichier de manifeste sur la base desdites informations de carreau ; et
- la récupération (3) dudit fichier de manifeste (8) à partir dudit réseau de distribution de contenu ; ledit fichier de manifeste comprenant des informations de segment (24) et/ou des liens (23) vers les informations de segment (25) ; lesdites informations de segment comprenant des informations de segments vidéo (9) dudit carreau vidéo ; et
- la sélection (4) d'un segment vidéo sur la base desdites informations de segment (24, 25) ;
- la récupération (5) dudit segment vidéo sélectionné ; et
- la lecture (6) dudit segment vidéo sur ledit dispositif client ;
**caractérisé en ce que** lesdites informations de carreau comprennent de multiples informations de position (29) concernant la position dudit carreau vidéo défini par ledit superfichier de manifeste (7) dans ladite vidéo panoramique ; et ladite sélection (2) dudit carreau vidéo tenant compte desdites informations de position ; et lesdites informations de carreau comprenant en outre des informations de timing correspondantes (30) indiquant un intervalle de temps pendant la durée de ladite vidéo panoramique au cours duquel les informations de positionnement correspondantes (29) dudit carreau vidéo sont valides ; et ladite sélection (2) dudit carreau vidéo tenant compte desdites informations de timing (30) dudit carreau vidéo.

2. Procédé selon la revendication 1, lesdites informations de position (29) comprenant les coordonnées d'au moins deux coins d'une zone rectangulaire ; ladite zone rectangulaire définissant ledit carreau vidéo dans l'espace au sein d'une vidéo panoramique.

3. Procédé selon la revendication 1, lesdites informations de carreau (31) comprenant des méta-informations concernant le contenu desdits carreaux vidéo définis par ledit superfichier de manifeste (7) au sein de ladite vidéo panoramique ; et ladite sélection (2) dudit carreau vidéo tenant compte desdites méta-informations.

4. Procédé selon la revendication 1, ledit fichier de manifeste identifiant une seule session adaptative de diffusion en continu HTTP.

5. Procédé selon la revendication 1, ladite récupération étant effectuée par une requête GET HTTP.

6. Procédé selon la revendication 1, ledit fichier de manifeste (8) et ledit superfichier de manifeste (7) étant codés sous forme de fichiers de listes de diffusion M3U.

7. Procédé selon la revendication 1, lesdites informations de segment (24) comprenant des informations sur les heures de début et de fin desdits segments vidéo pendant la durée de ladite vidéo panoramique ; et lesdites heures de début et de fin étant identiques pour les segments vidéo correspondants à travers les carreaux vidéo de sorte qu'un basculement sans coupure entre les carreaux vidéo soit possible.

8. Procédé selon la revendication 1, lesdites informations de segment comprenant des informations sur l'un ou plusieurs du groupe constitué par le débit binaire, la qualité, la résolution, le codec vidéo et le codec audio dudit segment vidéo.

9. Procédé selon la revendication 1, lesdits liens vers des informations étant des hyperliens au sein dudit fichier ou superfichier de manifeste dirigeant vers un fichier distinct comprenant lesdites informations.

10. Dispositif client (43) permettant de sélectionner un segment vidéo (9) d'une vidéo panoramique à partir d'un réseau de distribution de contenu, le dispositif (43) comprenant en outre :
- un dispositif de récupération de fichiers (40) conçu pour récupérer un superfichier de manifeste (7) à partir dudit réseau de distribution de contenu, ledit superfichier de manifeste définissant des carreaux vidéo, ledit superfichier vidéo de manifeste comprenant des informations de carreau et/ou des liens vers les informations de carreau ; lesdites informations de carreau comprenant un lien (27) pour récupérer un fichier de manifeste correspondant (8) pour chacun desdits carreaux vidéo ; et
- un dispositif de sélection (41) conçu pour sélectionner un carreau vidéo et un fichier de manifeste correspondant (8) à partir dudit superfichier de manifeste (7) sur la base desdits informations de carreau ; et
ledit dispositif de récupération (40) étant en outre conçu pour récupérer ledit fichier de manifeste à partir dudit réseau de distribution de contenu ; ledit fichier de manifeste comprenant des informations de segment (24) et/ou des liens vers les informations de segment sur des segments vidéo (9) dudit carreau vidéo ; et ledit dispositif de sélection (41) étant en outre conçu pour sélectionner un segment de vidéo sur la base desdites informations de segment ;
ledit dispositif de récupération (40) étant en outre conçu pour récupérer ledit segment idéo sélectionné ; et
ledit dispositif client (43) comprenant en outre un lecteur vidéo (42) pour lire ledit segment vidéo sur ledit dispositif client ;
**caractérisé en ce que** lesdites informations de carreau comprenant de multiples informations de position (29) concernant la position dudit carreau vidéo défini par ledit superfichier de manifeste (7) au sein de ladite vidéo panoramique ; et ledit dispositif de sélection (41) étant en outre conçu pour tenir compte desdites informations de position lors de ladite sélection dudit carreau vidéo et du fichier de manifeste correspondant ;
et lesdites informations de carreau comprenant en outre des informations correspondantes (30) indiquant un intervalle de temps pendant la durée de ladite vidéo panoramique au cours duquel les informations de positionnement correspondantes (29) dudit carreau vidéo sont valides ; et ledit dispositif de sélection (41) étant en outre conçu pour tenir compte desdites informations de timing (30) dudit carreau vidéo lors de la sélection dudit carreau vidéo et du fichier de manifeste correspondant.

11. Produit de programme informatique comprenant des instructions exécutables par ordinateur pour exécuter le procédé selon la revendication 1 lorsque le programme est exécuté sur un ordinateur.

12. Support de stockage lisible par ordinateur comprenant le produit de programme informatique selon la revendication 11.

13. Système de traitement de données programmé pour effectuer le procédé selon la revendication 1.
